Europäisches Patentamt

European Patent Office

Office européen des brevets

(11) Veröffentlichungsnummer: **0 340 582**
**A1**

## EUROPÄISCHE PATENTANMELDUNG

(21) Anmeldenummer: 89107345.4

(22) Anmeldetag: 24.04.89

(51) Int. Cl.⁴: **C09J 3/16 , C09J 3/14 , C09J 3/12 , C08L 75/04 , C08L 53/02 , //(C08L75/04, 53:02,25:00),(C08L53/02,75:04)**

(30) Priorität: 06.05.88 DE 3815520

(43) Veröffentlichungstag der Anmeldung:
08.11.89 Patentblatt 89/45

(84) Benannte Vertragsstaaten:
**CH DE ES FR GB IT LI**

(71) Anmelder: **BAYER AG**

**D-5090 Leverkusen 1 Bayerwerk(DE)**

(72) Erfinder: **Beck, Manfred, Dr.**
**Weberstrasse 11 a**
**D-5272 Wipperfürth(DE)**
Erfinder: **Müller-Albrecht, Horst, Dr.**
**Roggendorfstrasse 59**
**D-5000 Köln 80(DE)**
Erfinder: **Königshofen, Heinrich, Dr.**
**Am Mühlenberg 26**
**D-5060 Bergisch-Galdbach(DE)**

(54) **Klebstoffmischung.**

(57) Als Klebstoffe Mischungen aus
    A) 40 - 99 Gew.-Teilen eines Polyurethans
    B) 0,2 - 50 Gew.-Teilen eines halogenierten Vinylaromat/Dien-Polymeren oder Polystyrols
    C) 0 - 10 Gew.-Teilen eines Polyisocyanats
gegebenenfalls gelöst in einem organischen Lösungsmittel.

EP 0 340 582 A1

## Klebstoffmischung

Die Verklebung von Gummisohlen mit Polyurethanklebstoffen liefert in vielen Fällen ohne spezielle Vorbehandlung keine zufriedenstellenden Haftwerte. Daher sind zahlreiche Vorschläge zur Verbesserung der Haftung gemacht worden. So wurde in der GB-PS 1 500 296 vorgeschlagen, die Lauffläche von Sohlen vor dem Klebstoffauftrag mit Lösungen von N-Halogenverbindungen einzustreichen (sog. Primern). Derart vorbehandelte Sohlen liefern bei Verwendung von Polyurethanklebstoffen (PU-KR) gute Haftwerte. Von Nachteil ist, daß ein zusätzlicher Arbeitsgang vor der Verklebung erforderlich ist. Es ist ferner bekannt, N-Halogenverbindungen mit dem Klebstoff zur Reaktion zu bringen bzw. Gemische davon als Primer zu verwenden (GB-PS 1 293 842). Auch hier gelten die oben genannten Nachteile. Ein anderer Primer wird in GB-PS 2 048 897 beschrieben, der ein Reaktionsprodukt aus einer N-Halogenverbindung und einem SBS-Blockpolymer ("SBS") darstellt. Auch in diesem Fall enthalten frisch angesetzte Primerlösungen noch H-Halogenverbindungen, ferner bleibt die Notwendigkeit eines zu sätzlichen Arbeitsganges. Weiterhin ist aus DE-OS 2 454 553 bekannt in Blockcopolymere mit mindestens zwei Polymerblöcken auf Basis von aromatischen Alkenylverbindungen und einem Block auf Basis eines Dienkohlenwasserstoffs durch Einwirkung von Erdalkalihypochlori sowohl Chlor- als auch Hydroxygruppen einzuführen (Hydroxychlorierung) und diese Lösungen als Primer oder Abmischungen solcher hydroxychlorierten Blockpolymerlösungen mit Polyurethanklebstoffen zur Verklebung von Gummisohlen zu verwenden. Von erheblichem Nachteil ist, daß die hydroxychlorierten Reaktionsprodukte nach Abtrennen aus der Kohlenwasserstofflösung sich als praktisch unlöslich erwiesen haben und nicht wieder ohne weiteres in Lösungsmitteln gelöst werden können.

Es besteht daher nach wie vor Bedarf an einem Klebstoff, der ohne Anwendung eines Primers zum Verkleben von Sohlen, insbesondere aus thermoplastischen Kautschuken vom Typ SBS oder ähnlichen Produkten geeignet ist. Diese Sohlenmaterialien können wegen ihrer unpolaren Struktur gegenüber PU-Klebstoffen keine ausreichenden Haftkräfte ausbilden. Gegenstand der Erfindung sind als Klebstoffe geeignete Mischungen aus

A) 40 - 99 Gew.-Teilen eines Polyurethans

B) 0,2 - 50 Gew.-Teilen eines halogenierten Vinylaromat/Dien-Polymeren oder Polystyrols

C) 0 - 10 Gew.-Teilen eines Polyisocyanats

Als Klebstoff liegen diese Mischungen in Lösungsmitteln vor. Sie liefern ohne Anwendung eines Primers Verklebungen aus SBS-Blockpolymeren (z. B. als Sohlenmaterial) mit sich oder anderen Polymeren mit sowohl in der Anfangshaftung als auch in der Endhaftung guten Werten. Mischungen aus Polyurethanklebstoffen mit Styrol/Butadienblockpolymeren geben keine brauchbaren Verklebungen. Die erfindungsgemäßen Mischungen sind lagerstabil. Während frisch hergestellte Mischungen aus dem Polyurethanklebstoff und dem Styrol/Butadienblockpolymeren in beispielsweise Methylethylketon zunächst gleichmäßig trübe erscheinen, beginnen sich nach wenigen Stunden zwei Phasen auszubilden, deren Volumanteile vom Mischungsverhältnis der Komponenten abhängen. Mischungen aus Polyurethan und dem halogenierten SBS in den bevorzugten Lösungsmitteln stellen dagegen trübe, disperse Systeme dar, die monatelang unverändert bleiben. Die Trübe wird verursacht durch sehr kleine gleichmäßig verteilte Partikel, die keine Tendenz zur Sedimentation zeigen. Solche Mischungen sind monatelang stabil und entsprechen der Forderung nach einem sedimentationsstabilen Klebstoff, der ein hohes Haftwerte-Niveau liefert.

Bei der für die erfindungsgemäßen geeigneten Komponente (A) handelt es sich z. B. um weitgehend lineare, endständige Hydroxylgruppen aufweisende, lösliche oder schmelzbare Polyurethane. Die Anwendung dieser Werkstoffe zum Verkleben verschiedener Substrate ist bekannt. Ihre Herstellung ist beispielsweise in der DE-PS 1 256 822, 1 930 336 oder 2 161 340 beschrieben. Es handelt sich um auf Basis kristalliner Dihydroxypolyester vom Molekulargewicht 800 - 4.000 unter Verwendung von Kettenverlängerungsmitteln und Diisocyanaten aufgebaute Polyurethane. Gleichermaßen verwendbar sind Polyesterpolyurethane, in denen die Polyesterkomponente aus einer Mischung verschiedener Alkohole hergestellt wurde (DE-OS 3 502 379). Solche Polyurethane haben ein günstiges Wärmeaktivierverhalten. Nähere Angaben über Polyesterkomponenten und deren Mengenverhältnisse, über die Diolkomponenten sowie über die Diisocyanatkomponenten sind in den oben genannten Patentschriften ausführlich gemacht. Die Zusammensetzung der Komponente A in den beanspruchten Mischungen ist jedoch nicht nur auf die genannten Polyurethane beschränkt. Möglich ist auch die Anwendung von Polyether- oder Polyetheresterdiole enthaltenden Reaktionsprodukten mit Polyisocyanaten. Auch analoge Polyurethane, deren Polyesterkomponente ein Polycarbonat ist, oder in denen Polycarbonatgruppen neben Carbonsäureestergruppen vorliegen, sind möglich. Ferner können auch Polyester verwendet werden, in denen die Säurekomponente eine Mischung aus verschiedenen Carbonsäuren ist. Außer Polyestern auf Basis von C4-Diolen lassen sich auch solche einsetzen, die aus C2-C3-Diolen bzw. Gemischen daraus mit C4-Diolen hergestellt wurden.

Bevorzugt sind die Verfahrensprodukte nach den DE-PS 1 256 822, 1 930 336 und 2 161 430 sowie nach der DE-OS 3 502 379.

Die zur Herstellung der halogenierten Blockpolymeren (B) verwendbaren Blockpolymere enthalten mindestens einen Block aus polymerisierten vinylaromatischen Verbindungen wie Styrol, Vinyltoluol, α-Methylstyrol, Vinylnaphthalin und in besonderen Fällen auch zusätzlich kleine Mengen von Divinylverbindungen wie Divinylbenzol. Bevorzugt sind Styrol und α-Methylstyrol, besonders bevorzugt ist Styrol. Das Polymerisat dieser Monomeren bildet den sogenannten harten Block (auch als "S" für Styrol bezeichnet).

Der Dienblock enthält als polymerisierte Diene bevorzugt 1,3-Diene mit 4 bis 6 C-Atomen. Beispiele hierfür sind 1,3-Butadien, Isopren, 2,3-Dimethyl-1,3-butadien. Bevorzugt sind Butadien und Isopren, besonders bevorzugt ist Butadien. Der Dienblock wird deshalb auch mit "B" (für Butadien) bezeichnet. Es handelt sich hier um den sogenannten Weichblock.

Die Blockpolymeren können in bekannter Weise durch anionische Polymerisation in flüssigen Kohlenwasserstoffen als Lösungsmittel hergestellt werden. Die Struktur der hierbei erhältlichen Blockpolymeren kann sehr vielfältig sein. Im einfachsten Fall handelt es sich um Blockpolymere vom Typ S-B. Eine Abwandlung hiervon sind die Blockpolymeren mit Übergangsblöcken (tapered structures), symbolisiert durch S-SB-B, worin SB einen sich in der Zusammensetzung von "styrolreich" bis "butadienreich" kontinuierlich ändernden Block darstellt. Sie entstehen bei der gleichzeitigen Polymerisation beider Monomeren. Durch Kopplung von lebenden Blockpolymeren können Strukturen der Form S-B-S oder mit mehrfunktionellen Kopplern (SB)$_n$K entstehen, worin K das Kopplermolekül und n dessen Kopplungswertigkeit symbolisieren. Möglich ist auch die Herstellung von Blockpolymeren durch abwechselnde Zugabe von Monomeren, wobei Blockpolymere vom Typ (SB)$_n$-S gebildet werden. Möglich ist ferner auch die Herstellung von Polymeren mit endständigen Dienblöcken. Ferner kann man durch abwechselnde Kombination der getrennten und der gemeinsamen Zugabe der Monomeren weitere Strukturvarianten herstellen. Durch variierende Zugabe des als Initiator verwendeten Alkalimetall-Katalysatores vor und während der Polymerisation lassen sich andere Strukturvarianten erzeugen. Dem Fachmann ist weiter bekannt, daß durch Wahl der Reaktionstemperatur und des Lösungsmittels die Struktur der Blockpolymeren (Vinylgehalt der Dienkomponente, statistische Verteilung der Monomeren) beeinflußt werden kann. Ferner können durch Zugabe geringer Mengen Divinylbenzol zusätzliche Verzweigungen eingebaut werden. Eine weitere Variable ist das Mengenverhältnis der Monomeren.

Möglich ist auch die Verwendung von Monomergemischen zum Aufbau der harten und der weichen Blöcke, beispielsweise Styrol und α-Methylstyrol oder Butadien und Isopren, wobei die Polymeren dieser Monomeren getrennte Blöcke darstellen können.

Weitere Typen, die insbesondere zur Herstellung der nachstehend beschriebenen modifizierten Komponente (C) eingesetzt werden können, sind styrolgepfropfte SB-Blockpolymere.

In speziellen Fällen sind auch partiell oder vollständig hydrierte Blockpolymere einsetzbar. Weitere Typen sind statistische Styrol/Butadiencopolymere.

Das Mengenverhältnis von Dien/Vinylaromat kann in den Polymeren variieren. Bevorzugt sind Polymere mit einem Styrolgehalt über 30 %, besonders bevorzugt solche mit über 60 %. In Sonderfällen können auch Polymere mit einem nur sehr geringen Dienanteil von etwa 1 % verwendet werden. Auch Polystyrol kann als Endglied dieser Reihe eingesetzt werden.

Das halogenierte Vinylaromat/Dien-Polymer (B) wird erhalten durch eine Halogenierungsreaktion an Polystyrol oder an der Polybutadienkomponente eines Vinylaromat/Dien-Polymeren, im folgenden auch S/B-Copolymer genannt. Als Blockpolymere können alle oben genannten Typen eingesetzt werden. Möglich ist auch die Verwendung von statistischen Vinylaromat/Dien-Copolymeren. Unter Halogenierungsreaktionen sind die an olefinisch ungesättigten oder an allylischen Gruppen durchführbaren Reaktionen zu verstehen, die zur Einführung von Halogen führen. Diese Verfahren sind bekannt. Als einige Beispiele hierfür seien genannt: die Halogenierung mit elementarem Halogen, bevorzugt mit Chlor.

Eine weitere Methode ist die Anwendung von N-Halogenverbindungen. Beispiele hierfür sind N,N-Dichlordimethylhydantoin, Trichlorisocyanursäure, Dichlorglykoluril, Chloramin T, Na-Dichlorisocyanurat, N-Bromsuccinimid.

Brauchbar ist auch die Methode der Dichlorcarbenreaktion mit den Doppelbindungen der Butadieneinheiten. Die erhaltenen Produkte lassen sich durch ihren Halogengehalt charakterisieren.

Die untere Grenze des Halogengehalts liegt vorzugsweise bei etwa 0,2 %, bezogen auf das Polymere. Die obere Grenze ist festgelegt durch den Diengehalt des S/B-Polymeren. Sie ist erreicht bei vollständiger Sättigung der Doppelbindungen. Der tatsächlich erreichte Halogengehalt hängt ab von der Art der Halogenierung (z. B. Chlorierung, Dichlorcarbenylierung). In besonderen Fällen können auch zusätzlich Allyl-H-Atome durch Halogen substituiert oder nach Abspaltung von HCl neu entstandene Doppelbindungen

3

abermals chloriert sein.

Polystyrol wird vorzugsweise bis zu einem Halogengehalt von maximal 30 Gew.-%, bezogen auf das halogenierte Polystyrol, insbesondere bis zu 10 Gew.-% halogeniert.

Die Mischungen aus den Komponenten A und B können sowohl unverdünnt als auch unter Verwendung eines Lösungsmittels angewendet werden. Im ersteren Fall ist eine Anwendung aus der Schmelze, im anderen, bevorzugten Falle die Anwendung durch Auftragen der Lösung und Verdunsten des Lösungsmittels möglich. Als Lösungsmittel kommen niedrigsiedende Flüssigkeiten in Frage. Bevorzugt eignen sich aromatische und cycloaliphatische Kohlenwasserstoffe und Alkohole. Besonders bevorzugt sind Ketone wie Butanon, Aceton, Ester wie Ethylacetat, Methylenchlorid und Toluol. Häufig sind besonders günstig Gemische der oben genannten Lösemittel.

Die Lösung der erfindungsgemäßen Mischungen in den Lösemitteln kann auf üblichem Wege hergestellt werden. Die erfindungsgemäßen Mischungen können die üblichen bekannten Stabilisatoren enthalten, beispielsweise zur Stabilisierung der Komponente B ein phenolisches Antioxidans sowie für Komponente C Stabilisatoren gegen Dehydrohalogenierung wie Epoxide.

Ferner können die Mischungen auch Füllstoffe, Farbstoffe und weitere Polymere enthalten. Zur Erreichung spezieller Eigenschaften können den Mischungen natürliche oder synthetische Harze die Phenolharze, Ketonharze, Kolophoniumderivate, Phthalatharze, Acetyl- oder Nitrocellulose zugefügt werden.

Den Mischungen der Komponenten A - C können als Komponente (C) gegebenenfalls Polyisocyanate kurz vor dem Gebrauch zugemischt werden, um die Wärmefestigkeit der Verklebungen zu verbessern. Typische Beispiele hierfür sind Diisocyanate und Triisocyanate. Bevorzugt sind Triisocyanate, z. B. Triphenylmethantriisocyanat oder Thiophosphorsäure-tris-(p-isocyanatophenylester).

Beschreibung der Klebstoffkomponenten

Nachstehend sind die Komponenten der Mischungen charakterisiert.

PU 1:

Polyesterpolyurethan aus 1 Mol Poly-1,6-hexandioladipat vom Molekulargewicht 3.000, 0,8 Mol eines Gemisches aus Butandiol-1,4 und Hexandiol-1,6 und 1,799 Mol Diphenylmethandiisocyanat (MDI) mit einer Lösungsviskosität (15 %ig in Methylethylketon) von 1 - 2 Pas.

PU 2:

Polyesterpolyurethan aus 1 Mol Poly-1,6-hexandioladipat vom Molekulargewicht 2.250, 0,9 Mol eines Gemisches aus Butandiol-1,4 und Hexandiol-1,6 und 1,899 Molen Diphenylmethandiisocyanat (MDI) mit einer Lösungsviskosität (15 %ig in Methylethylketon) von 1 - 2 Pas.

SB1:

SB-Blockpolymer mit 20 % Butadien, 80 % Styrol, Blockstyrolgehalt 74,8 %, Jodzahl 96, L-Wert (5 g/l in Toluol bei 25° C) 72,2 ($cm^3$/g).

SB2:

Styrol/Butadien-Blockpolymer vom Typ SBS, Butadiengehalt 64 %, [$\eta$] 79 ($cm^3$/g in $CH_2Cl_2$) (Cariflex 1102 der Shell AG).

Polyisocyanat C:

Thionophosphorsäure-tris-(p-isocyanatophenylester), Lösung in Methylenchlorid, NCO-Gehalt 5,4 + 0,2 %.

Soweit in folgenden Mengen "Teile" angegeben werden, handelt es sich, falls nichts anderes vermerkt ist, um Gewichtsteile.

## Ausführung der Verklebungen

Unter Verwendung der nachstehend beschriebenen 20 %igen Klebstofflösungen wurden Verklebungen von Weich-PVC (45 % DOP) mit einem gefüllten Sohlenmaterial auf Basis von Styrol/Butadien-Blockpolymeren ausgeführt. Nach dem Auftragen auf Streifen von 15 x 3 cm ließ man beide Seiten 30 Minuten ablüften und unterzog dann die Probe mit dem thermoplastischen Kautschuk 4 Sekunden einer Schockaktivierung mit Hilfe eines IR-Strahlers (Funck-Aktiviergerät Typ A 1000).

Sofort danach wurden die Prüfkörper aufeinandergelegt und innerhalb von 10 Sekunden in einer Presse bei Raumtemperatur und einem Druck von 0,4 MPa 10 Sekunden lang verpreßt.

Sofort danach (innerhalb von 30 Sekunden) wurde die erste Prüfung auf Schälfestigkeit in einer Zerreißmaschine ausgeführt (Sofortwert, Abzugsgeschwindigkeit 100 mm/Min.). Eine weitere Prüfung erfolgte nach 1 Tag, eine weitere nach 9 Tagen. Eine Variante bestand darin, daß unmittelbar von dem Klebstoffauftrag der Lösung 5 phr Polyisocyanat C zugefügt wurden. Die Ergebnisse sind jeweils gekennzeichnet durch "ohne" bzw. "mit Isocyanat".

## Beispiel 1:

## Chlorierung des Blockpolymeren SB 1

300 g des Blockpolymeren SB 1 werden unter Stickstoff in 2.700 g Toluol gelöst. Bei Raumtemperatur leitet man unter Rühren die in Tabelle 1 angegebenen Mengen Chlor ein. Nach der Chlorierung wird soviel Toluol i. Vak. (100 mbar) abdestilliert, daß eine Lösung mit 40 % Feststoff entsteht. Der Lösung fügt man 1 % Diglycidylether des Bisphenol A (bez. auf Feststoff) zu.

Tabelle 1

| Chlorierungsprodukte aus SB1 | | | |
|---|---|---|---|
| Modifikator | g $Cl_2$ eingeleitet | % Cl im Polymer | L-Wert (1/g) [1] |
| 1 A | 50,1 | 9,2 | 69,5 |
| 1 B | 34,7 | 7,5 | 70,9 |
| 1 C | 24,9 | 4,6 | 70,0 |
| 1 D | 9 | 2,5 | 73,8 |
| 1 E | 4,5 | 1,3 | 75,4 |
| [1] 5 g/l in Toluol bei 25 °C; $\eta_{spez.}/C$ | | | |

## Beispiel 2:

## Klebstoffmischungen aus den Modifikatoren A - E von Beispiel 1

Es wurden Klebstoffmischungen nach Tabelle 2a hergestellt und die Lösungen zur Verklebung von thermoplasti schem Kautschuk (Sohlenmischung mit 55 % SBS-Blockpolymer, 37 % Öl, 8 % Füllstoff) gegen Weich-PVC (45 % Weichmacher) verwendet.

Tabelle 2a

| Klebstofflösungen | | | | |
|---|---|---|---|---|
| Beispiel | Modifikator nach Bsp. 1 | Modifikator (Gew.-%) | Polyurethan PU 1 (Gew.-%) | Lösungsmittel (Gew.-%) [1] |
| 2 A | 1 A | 4 | 16 | 80 |
| 2 B | 1 B | 4 | 16 | 80 |
| 2 C | 1 C | 4 | 16 | 80 |
| 2 D | 1 D | 4 | 16 | 80 |
| 2 E | 1 E | 4 | 16 | 80 |
| Vergleich | - | - | 20 | 80 |

[1] Mischung Aceton/Ethylacetat; 3 : 1 Gew.-Teile

Tabelle 2b

| Ergebnisse der Klebstoffprüfung | | | | | |
|---|---|---|---|---|---|
| | Schälfestigkeit (N/mm) | | | | |
| Klebstoff | ohne Isocyanat | | | mit Isocyanat | | |
| | sofort | 1 Tag | 9 Tage | sofort | 1 Tag | 9 Tage |
| 2 A | 0,6 | 2,1 | 3,8 | 0,8 | 4,0 | 4,7 |
| 2 B | 0,6 | 2,7 | 3,9 | 0,5 | 2,6 | 4,9 |
| 2 C | 1,3 | 4,0 | 5,0 | 1,0 | 4,0 | 5,1 |
| 2 D | 1,7 | 5,2 | 6,7 | 1,3 | 4,8 | 5,8 |
| 2 E | 2,0 | 4,2 | 6,0 | 3,1 | 6,4 | 5,7 |
| Vergl. | 0,3 | 0,4 | 0,5 | 0,8 | 0,5 | 0,5 |

Die Ergebnisse zeigen, daß mit abnehmendem Chlorgehalt bis in den Bereich von ca. 1 % Chlor verbesserte Schälfestigkeiten bei Gemischen aus

1) einem Polyurethan und
2) einem chlorierten S/B-Copolymeren

erhalten werden. Die Klebstofflösungen stellen stabile, 2-phasige, sehr feindisperse Gemische dar, die eine Lagerstabilität bei 25° C von mindestens 6 Monaten haben. Die feindisperse 2-Phasigkeit des Systems ist eine unabdingbare Voraussetzung für das Haftvermögen an S/B-Blockpolymer-Substraten.

Beispiel 3:

Lagerstabilität verschiedener Klebstoffmischungen

Es wurden die in Tabelle 3 beschriebenen Klebstoffmischungen hergestellt und einer Lagerung bei 25° C unterzogen. Die Versuche zeigen, daß disperse Zweistoffmischungen, hergestellt aus den besonders bevorzugten niedrigchlorierten, hochstyrolhaltigen Modifikatoren und einem Polyurethan, sowohl der Forderung nach Phasen-Stabilität als auch der nach hoher Schälfestigkeit entsprechen (Beispiel 3A). Mischungen, die zusätzlich noch als dritte Komponente ein S/B-Blockpolymer enthalten (3B, 3C), sind nicht lagerstabil, wenn als Modifikator ein niedrigchloriertes, hochstyrolhaltiges S/B-Polymer verwendet wird und liefern meist auch keine hochfesten Verklebungen.

**Tabelle 3:** Sedimentations-Stabilität von Klebstofflösungen (20 Gew.-% Feststoff in Aceton/
Ethylacetat 3 : 1)

| Bei-spiel | PU 1 Gew.-Tle. | Modifikator | | S/B-Blockpolymer | | Lösungsm. Gew.-Tle. | Stabilität[1] (Wochen) | Schälfestigk.[2] |
|---|---|---|---|---|---|---|---|---|
| | | Typ | Gew.-Tle. | Typ | Gew.-Tle. | | | |
| 3 A | 16 | 1D | 4 | - | - | 80 | > 28 | 6,7 |
| 3 B | 16 | 1D | 4 | SB2 | 2 | 80 | < 5 | 2,1 |
| 3 C | 16 | 1E | 2 | SB1 | 2 | 80 | < 0,01 | - [3] |

[1] Stabilität: Zeit bis zur Ausbildung von einer oberen und einer unteren Phase (Brechen der Dispersion).

[2] Ohne Isocyanatzusatz nach 9 Tagen

[3] Nicht prüfbar wegen unzureichender Stabilität

EP 0 340 582 A1

Beispiel 4:

Dieses Beispiel zeigt, daß die beanspruchten Mischungen nicht nur zur Verklebung von S/B-Blockpolymer-Sohlen (z. B. Cariflex TR) geeignet sind, sondern auch für Sohlenmaterial auf Basis von SBR-Kautschuk (Nora-Test) oder Nitrilkautschuk (KASX). Zur Verklebung wurde der in Beispiel 2 beschriebene Klebstoff 2D verwendet, wobei allerdings 18 Gew.-Teile PU1 und 2 Gew.-Teile 1D eingesetzt wurden. Die Schälfestigkeiten sind in Tabelle 4 zusammengestellt.

Tabelle 4

| Beispiel | Substrat | Schälfestigkeit (N/mm) | | | | | |
|---|---|---|---|---|---|---|---|
| | | ohne Isocyanat | | | mit Isocyanat | | |
| | | sofort | 1 Tag | 9 Tage | sofort | 1 Tag | 9 Tage |
| 4 A | Nora-Test | 3,8 | 5,0 | 5,4 | 5,2 | 8,0 | 8,0 |
| 4 B | KASX | 2,3 | 6,6 | 7,8 | 3,6 | 7,0 | 7,6 |

Beispiel 5:

Analog Beispiel 1 wurde eine Mischung mit 20 Gew.-% Feststoffgehalt aus den Komponenten PU2 und dem Modifikator nach Beispiel 1D (Gewichtsverhältnis 95 : 5) im Lösungsmittelgemisch Aceton/Ethylacetat (Gew.-Verhältnis 3 : 1) hergestellt. Tabelle 5 zeigt die Schälfestigkeiten.

Tabelle 5

| Beispiel | Schälfestigkeit (N/mm) | | | | | |
|---|---|---|---|---|---|---|
| | ohne Isocyanat | | | mit Isocyanat | | |
| | sofort | 1 Tag | 9 Tage | sofort | 1 Tag | 9 Tage |
| 5 | 1,3 | 3,8 | 5,5 | 1,9 | 4,6 | 5,2 |

Beispiel 6:

Dieses Beispiel zeigt, daß die erfindungsgemäß halogenierten Styrol/Butadien-Polymeren ohne Veränderung der Eigenschaften isoliert werden können. Dies ist eine Voraussetzung für eine technische Verwendbarkeit. Die nach der DE-OS 2 454 553 herstellbaren S/B-Derivate mit OH-und Cl-Atomen, gebunden an die Hauptkette, lassen sich nur in Lösung handhaben. Nach Abtrennen aus der Lösung erwiesen sie sich als unlöslich.

Die nach Beispiel 1A und 1D hergestellten Modifikatoren wurden aus ihren Lösungen

    a) durch Eindampfen im Vakuum bei 60°C

    b) durch Eindampfen im Vakuum bei 100°C

    c) durch Strippen mit Wasserdampf

    d) durch Fällen mit Methanol und Trocknen im Vakuum bei 60°C isoliert.

In Tabelle 6 sind die Halogengehalte zusammengestellt. Es wurden keine Unterschiede festgestellt. Die Produkte waren in gängigen Lösungsmitteln wie Aceton, Methylethylketon, Methylenchlorid und Toluol

9

löslich. Aus ihnen ließen sich stabile Dispersionen herstellen, wenn man sie mit PU1 im Verhältnis 10 : 90 oder 20 : 80 in einer Mischung aus Aceton/Ethylacetat (3 : 1) auflöste. Die Schälfestigkeiten von daraus hergestellten Verklebungen waren identisch mit den in Beispiel 2 beschriebenen.

Tabelle 6

| Aufarbeitungsmethode | Modifikator 1A % Cl | Modifikator 1D % Cl |
|---|---|---|
| Eindampfen 50° C | 9,2 | 2,4 |
| Eindampfen 100° C | 9,2 | 2,6 |
| Strippen | 9,1 | 2,5 |
| Fällung | 9,1 | 2,5 |

**Ansprüche**

1. Mischungen aus
A) 40 - 99 Gew.-Teilen eines Polyurethans
B) 0.2 - 50 Gew.-Teilen eines halogenierten Vinylaromat/Dien-Polymeren oder Polystyrols
C) 0 - 10 Gew.-Teilen eines Polyisocyanats
gegebenenfalls gelöst in einem organischen Lösungsmittel unter Ausbildung von stabilen Dispersionen.

2. Mischungen nach Anspruch 1, in denen die Komponente B ein durch Halogenierung eines Vinylaromat/Dien-Polymeren erhaltenes Polymer darstellt.

3. Mischungen nach den Ansprüchen 1 und 2, in denen die Komponente B ein durch Chlorierung eines Styrol/Butadien-Blockpolymeren erhaltenes Polymer darstellt.

4. Verwendung von Mischungen nach den Ansprüchen 1 bis 3 zur Verbindung von Teilen aus Gummi, Leder oder Kunststoffen.

5. Verwendung von Mischungen gemäß Anspruch 4 zur Verklebung von Teilen aus Styrol/Butadien-Blockpolymeren und Gummi oder Leder.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 362 287 (STAMICARBON)<br>* Ansprüche 12-15; Seite 4, Absätze 2-4; Seite 5, Absatz 4 *<br>--- | 1-5 | C 09 J 3/16<br>C 09 J 3/14<br>C 09 J 3/12<br>C 08 L 75/04 |
| X | US-A-3 917 742 (J.T. HARLAN)<br>* Ansprüche 1,2,4; Zusammenfassung; Spalte 2, Zeile 20 - Spalte 3, Zeile 8 * & DE-A-2 454 553 (Kat. D)<br>--- | 1-5 | C 08 L 53/02 //<br>(C 08 L 75/04<br>C 08 L 53:02<br>C 08 L 25:00 ) |
| X | GB-A-1 086 976 (CHEMISCHE FABRIK KALK)<br>* Anspruch 1; Seite 2, Zeilen 28-41; Beispiel 1 *<br>--- | 1 | (C 08 L 53/02<br>C 08 L 75:04 ) |
| A | FR-A-2 230 703 (HOECHST)<br>* Ansprüche 1,3,5; Seite 3, Zeilen 16-27; Seite 5, Zeilen 4-10 *<br>--- | 1 | |
| A | FR-A-2 366 348 (BAYER)<br>* Ansprüche 1-2; Seite 4, Zeilen 11-28 *<br>--- | 1 | |
| P,X | EP-A-0 277 359 (BAYER)<br>* Ansprüche 1-7; Seite 3, Zeile 39 - Seite 4, Zeile 5 *<br>----- | 1-5 | RECHERCHIERTE SACHGEBIETE (Int. Cl.4)<br><br>C 09 J<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 14-08-1989 | VAN PUYMBROECK M.A. |